# DEMANDE DE BREVET EUROPEEN

(11) **EP 3 395 784 A1**
(43) Date de publication de la demande: **31.10.2018**
(21) Numéro de dépôt: 18168057.0
(22) Date de dépôt: 18.04.2018
(51) Int. Cl.: C04B 41/45, C04B 41/88, C04B 35/628, C04B 35/10, C04B 35/111, C04B 35/119, C04B 35/44, C04B 35/48, C04B 35/488, C04B 35/64, C04B 35/626, C04B 35/117, C04B 35/486, C04B 35/634, C04B 35/638, A44C 27/00, G04B 37/00, G04B 37/22

(54) **COMPOSANT EN CÉRAMIQUE POUR PIÈCE D'HORLOGERIE**

(30) Priorité: 20.04.2017 EP 17167235
(71) Demandeur: ROLEX SA, 1211 Genève 26 (CH)
(72) Inventeur: BOCCARD, Cyriaque, 74140 DOUVAINE (FR); MINCONE, Laurent, 74520 JONZIER-EPAGNY (FR); PUJOL, Ollivier, 1006 LAUSANNE (CH)
(74) Mandataire: Moinas & Savoye SARL

(57) **Abrégé**

Composant en céramique, notamment à base de zircone et/ou d'alumine, pour pièce d'horlogerie ou de joaillerie, caractérisé en ce qu'il comprend au moins un métal noble parmi le platine, le rhodium, l'osmium, le palladium, le ruthénium, ou l'iridium, en quantité inférieure ou égale à 5% en poids.

## Description

### Introduction

La présente invention concerne un composant en céramique. Un tel composant en céramique trouve des applications dans l'horlogerie, la joaillerie ou la bijouterie. Particulièrement, un tel composant trouve des applications dans une pièce d'horlogerie, notamment pour les composants de décoration, comme une lunette ou des composants fonctionnels, comme des pièces de mouvement.

### Etat de l'Art

Dans le domaine de l'horlogerie, de même que dans la bijouterie ou la joaillerie, il est connu d'utiliser des composants en céramique, notamment des composants de décoration. Mais une limite dans l'utilisation de ces composants en céramique provient de la difficulté, voire l'impossibilité, à obtenir certaines couleurs, notamment certaines teintes grises, et de la difficulté à obtenir une couleur homogène, prévisible et reproductible. De plus, l'obtention d'une teinte particulière nécessite l'élaboration d'un lot de matière complet à partir des composants initiaux et s'avère chronophage et complexe.

Une autre limite provient de même de la difficulté à tester l'effet d'ajouts de certains éléments, qui peuvent se combiner aux constituants de céramiques connues, notamment pour obtenir certaines caractéristiques mécaniques particulières du composant en céramique. Ici également, chaque essai est complexe et nécessite la mise en oeuvre d'un lot de matière complet à partir des composants initiaux.

Le procédé habituel de fabrication d'un composant en céramique comprend une première phase consistant à préparer la matière première, c'est-à-dire la poudre céramique, comme par exemple une poudre céramique à base de zircone et/ou d'alumine. Dans cette première phase, cette matière première est en général préparée sous forme de poudre céramique à laquelle on peut ajouter par exemple d'autres oxydes pour renforcer le composant céramique ou des pigments en vue d'obtenir une matière colorée. Les pigments sont en général du type oxyde métallique ou oxyde de terre rare, et sont ajoutés et mélangés à la poudre céramique de base par voie liquide, les pigments étant ainsi introduits par un liquide porteur.

Une deuxième phase du procédé de fabrication d'un composant en céramique consiste à intégrer un liant à la poudre céramique obtenue par la première phase. Un tel liant est en général constitué d'un ou plusieurs composés organiques. La nature et la proportion du liant dépendent du procédé prévu dans une troisième phase, et à l'issue de cette phase on parle de manière générale de poudre céramique liantée.

La troisième phase consiste en une mise en forme du composant en céramique. Pour cela, une première approche comprend une étape de pressage d'un agglomérat de particules liantées obtenues en fin de deuxième phase : dans un tel procédé, la deuxième phase prépare une poudre céramique liantée sous forme de granules atomisés de pressage. Une deuxième approche consiste en une mise en forme par injection dans un moule. Dans un tel cas, la préparation résultant de la deuxième phase est une poudre céramique liantée appelée par sa dénomination anglaise « feedstock ». Une troisième approche consiste en une mise en forme par coulage dans un moule, communément appelée coulage en barbotine. Dans un tel cas, la préparation résultant de la deuxième phase est une poudre céramique liantée en suspension appelée par sa dénomination anglaise « slurry » et barbotine en français. A la fin de la troisième phase, le composant en céramique présente une forme qui se rapproche de sa forme finale et contient à la fois la poudre céramique et le liant. D'autres techniques de mise en forme, comme le gel casting, freeze casting ou encore les techniques de Coagulation Casting peuvent être utilisées.

Une quatrième phase permet de finaliser le composant en céramique. Cette quatrième phase comprend une première étape consistant à délianter le composant, c'est-à-dire à supprimer le liant, par exemple par un traitement thermique ou au moyen d'un solvant. Une deuxième étape permet de densifier le composant en éliminant les pores provenant du déliantage. Cette deuxième étape consiste en général en un traitement thermique de frittage (une cuisson à haute température). La couleur finale du composant en céramique, ainsi que ses propriétés mécaniques finales, apparaissent uniquement à la fin de cette quatrième phase et sont issues des réactions entre les différents constituants du composant mais également de l'atmosphère présente dans le four, qui interviennent lors du traitement thermique. Ces réactions sont complexes et parfois imprévisibles.

On constate que le procédé traditionnel de fabrication d'un composant en céramique, rappelé ci-dessus, présente plusieurs inconvénients. Particulièrement, la couleur et les propriétés finales obtenues dépendent de nombreux paramètres, comme la microstructure de la poudre formée dans la première phase, notamment la taille des grains de céramique, la taille des pigments, leur réactivité avec la céramique et l'environnement de frittage, etc. Elle dépend de plus de tous les autres facteurs liés aux autres phases de fabrication, comme la taille et le nombre de pores dans le composant final, la composition des joints de grains, la densité, le pourcentage du ou des pigments ainsi que leur répartition dans la matrice, leur éventuelle combinaison entre eux ou avec les constituants de la matière première céramique ou l'atmosphère lors du frittage, la pureté chimique des composés initiaux et l'éventuelle présence de contaminants intrinsèques et extrinsèques. Cette multiplicité de paramètres à prendre en compte rend difficile la prédictibilité et la reproductibilité d'une certaine couleur qu'on souhaite fabriquer. Cette constatation est d'autant plus vraie si la quantité de pigments de coloration est faible : ainsi, pour réduire cet inconvénient, tous les procédés existants utilisent nécessairement une quantité importante de pigments. De plus, certains procédés tentent d'améliorer le résultat en ajoutant des étapes basées sur de la chimie complexe, ce qui présente naturellement l'inconvénient de complexifier davantage le procédé de fabrication.

D'autre part, la difficulté de gestion des couleurs d'un composant en céramique induit en pratique la nécessité de nombreux essais, comprenant la réalisation de nombreux échantillons complets, de l'élaboration de la poudre céramique liantée jusqu'à la mise en forme finalisée, en variant certains des paramètres susmentionnés pour chaque échantillon afin de déterminer le procédé optimal. De plus, lorsqu'on veut modifier une couleur, même légèrement, il faut recommencer toute l'élaboration intégralement, incluant de nouveau la préparation de nombreux échantillons. La recherche d'une couleur maîtrisée d'un composant en céramique, souvent nécessaire pour son utilisation comme élément de décoration, exige donc des étapes complexes et fastidieuses de mise au point en pratique.

Enfin, malgré les nombreux essais, on constate à ce jour qu'il apparaît impossible d'obtenir, a fortiori de manière industrielle, des composants en céramique présentant certaines couleurs, notamment certaines couleurs grises comme celles définies par les coordonnées colorimétriques CIE L*a*b* (83 ; 0 ; 0.6) et CIE L*a*b* (47 ; 0.2 ; -0.2). De manière générale, une couleur par exemple définie par des paramètres a* et b* proches de zéro et un paramètre L* inférieur à 96, notamment une couleur strictement grise, est impossible à obtenir.

Ainsi, le but général de la présente invention est de proposer une solution de fabrication d'un composant en céramique, notamment pour une pièce d'horlogerie, qui ne comprend pas les inconvénients de l'état de la technique.

Plus précisément, un premier objet de la présente invention est de proposer une solution de fabrication d'un composant en céramique qui permet d'obtenir une céramique aux propriétés améliorées, notamment dont la coloration est maîtrisée.

Un second objet de la présente invention est de proposer une solution de fabrication simplifiée d'un composant en céramique coloré.

Un troisième objet de la présente invention est de proposer une céramique grise.

Un quatrième objet de la présente invention est de proposer une méthode simple de modification d'une poudre céramique potentiellement déjà colorée pour modifier la couleur résultante du composant céramique terminé.

### Brève description de l'invention

A cet effet, l'invention repose sur un composant en céramique, notamment à base de zircone et/ou d'alumine ou d'aluminate de strontium, pour pièce d'horlogerie ou de joaillerie, caractérisé en ce qu'il comprend au moins un métal noble parmi le platine, le rhodium, l'osmium, le palladium, le ruthénium, ou l'iridium, en quantité inférieure ou égale à 5% en poids.

L'invention est plus précisément définie par les revendications.

### Brève description des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement un logigramme des étapes du procédé de fabrication d'un composant en céramique coloré pour pièce d'horlogerie selon un mode de réalisation de la présente invention.
La figure 2 représente un composant en céramique obtenu selon un premier exemple selon un mode de réalisation de l'invention.
La figure 3 représente un composant en céramique obtenu selon un deuxième exemple selon un mode de réalisation de l'invention.
La figure 4 représente un composant en céramique obtenu selon un troisième exemple selon un mode de réalisation de l'invention.
La figure 5 représente un composant en céramique obtenu selon un quatrième exemple selon un mode de réalisation de l'invention.
La figure 6 consiste en un tableau de résultats de composants en céramique obtenus selon sept exemples de mise en oeuvre d'un mode de réalisation de l'invention.
La figure 7 représente l'évolution de la clarté en fonction de la teneur en platine pour les composants en céramique des exemples 4 à 7 obtenus par un mode de réalisation de l'invention.
La figure 8 représente l'évolution du paramètre de chromaticité a* en fonction de la teneur en platine pour les composants en céramique des exemples 4 à 7 obtenus par un mode de réalisation de l'invention.
La figure 9 représente l'évolution du paramètre de chromaticité b* en fonction de la teneur en platine pour les composants en céramique des exemples 4 à 7 obtenus par un mode de réalisation de l'invention.
La figure 10 consiste en un tableau de résultats de composants en céramique obtenus selon trois exemples de mise en oeuvre d'un mode de réalisation de l'invention.
La figure 11 consiste en un tableau de résultats d'un composant en céramique obtenu selon un exemple de mise en oeuvre d'un mode de réalisation de l'invention.
La figure 12 représente un composant en céramique obtenu selon un exemple selon un mode de réalisation de l'invention.
La figure 13 représente un composant en céramique obtenu selon un autre exemple selon un mode de réalisation de l'invention.
La figure 14 consiste en un tableau de résultats de composants en céramique obtenus selon les deux exemples précédents de mise en oeuvre d'un mode de réalisation de l'invention.

Par la suite, nous désignerons par composant céramique un composant obtenu dans un matériau dense polycristallin comprenant principalement au moins une céramique, notamment à base de zircone et/ou d'alumine et/ou d'aluminate de strontium, par exemple une zircone stabilisée à l'oxyde d'yttrium et/ou de cérium et/ou de magnésium et/ou de calcium. On désignera par poudre céramique une poudre sous forme de solide finement divisé, composée de fines particules de céramique, notamment à base de zircone et/ou d'alumine et/ou d'aluminate de strontium. Pour simplifier la description, nous conserverons volontairement de manière élargie le même terme de poudre céramique pour une poudre comprenant principalement des fines particules de céramique, mais aussi d'autres éléments ajoutés comme par exemple un ou plusieurs pigments ou des oxydes visant à renforcer la céramique, tels que l'oxyde d'yttrium. Ainsi, la poudre ou le composant céramique comprend dans tous les cas majoritairement une composante de type céramique, soit au moins 50% en poids de cette composante de type céramique, voire au moins 75%, voire au moins 90%. Par exemple, le composant céramique comprend au moins 50% en poids de zircone.

Dans tous les cas, une poudre céramique ne contient pas de composé organique. Nous désignerons par le terme générique de poudre céramique liantée un matériau composite constitué par une poudre céramique et un liant, généralement constitué par un ou plusieurs composés organiques, dans des proportions variables, destiné à la mise en forme d'une pièce par pressage, par injection, par coulage ou par d'autres techniques.

Nous désignerons par granule (de pressage) un agglomérat de poudre céramique liantée, destiné à une mise en forme par un procédé de pressage, par exemple un pressage uniaxial à froid ou à chaud ou un pressage isostatique à froid ou à chaud. Un granule comprend en général entre 1% et 4% inclus en poids de composés organiques.

Nous désignerons par le terme de poudre céramique injectable, aussi généralement dénommée par le terme anglo-saxon de « feedstock », une poudre céramique liantée destinée à une mise en forme par un procédé d'injection, haute ou basse pression. Une poudre céramique injectable comprend en général entre 12 et 25% inclus en poids de composés organiques.

Nous désignerons par le terme de « slurry » une poudre céramique liantée destinée à une mise en forme par coulage en barbotine ou par gel-casting. Un slurry comprend en général entre 1% et 25% inclus en poids de composés organiques.

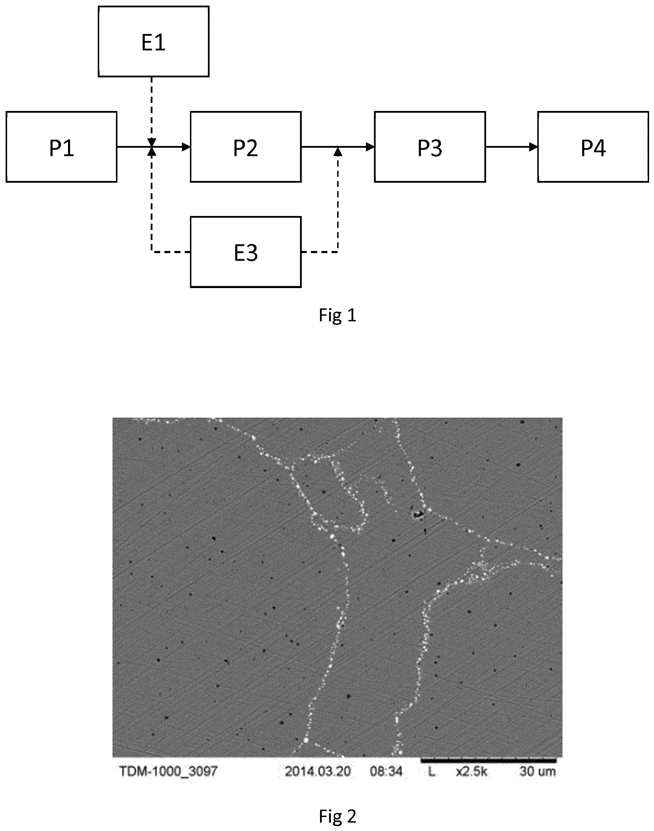

Le procédé de fabrication d'un composant céramique selon un mode de réalisation de l'invention comprend les phases et les étapes schématiquement représentées par le logigramme de la figure 1.

Ce procédé de fabrication comprend donc les phases habituelles P1 à P4 du procédé, à savoir la préparation de la poudre céramique (P1), l'ajout d'un liant (P2), la mise en forme du composant (P3) et le traitement thermique de déliantage-frittage (P4). Les parties traditionnelles de ces phases ne seront pas détaillées à ce stade puisqu'elles sont connues de l'état de la technique. L'homme du métier saura donc les mettre en oeuvre, y compris selon toutes les variantes ou équivalences existantes.

Le mode de réalisation de l'invention se distingue particulièrement du procédé traditionnel par l'ajout d'une étape de dépôt E3 d'au moins un élément ou composé additionnel, par exemple un élément de coloration, par voie sèche.

Selon une première variante de réalisation, l'étape de dépôt E3 consiste en un dépôt physique en phase vapeur, connu par le sigle PVD pour l'expression anglo-saxonne de « Physical Vapor Deposition », et/ou en un dépôt chimique en phase vapeur, connu par le sigle CVD pour l'expression anglo-saxonne de « Chimical Vapor Deposition ».

Selon une deuxième variante de réalisation, l'étape de dépôt E3 consiste en un dépôt par couche atomique, connu par le sigle ALD pour l'expression anglo-saxonne de «Atomic Layer Deposition ».

Cette étape de dépôt E3 est mise en oeuvre sur une poudre céramique, liantée ou non, donc après la première phase P1 ou après la deuxième phase P2 du procédé de fabrication. Elle peut donc être mise en oeuvre sur une poudre céramique ne comprenant que des particules de céramique ou sur une poudre céramique comprenant des composés organiques, par exemple sur un granule ou sur du feedstock d'injection. Elle est mise en oeuvre avant la troisième phase P3 du procédé. Pour simplifier la description, nous continuerons d'appeler poudre céramique, liantée ou non, la poudre céramique comprenant un ou plusieurs élément(s) ou composé(s) additionnel(s), obtenue par la mise en oeuvre de l'étape de dépôt E3 de l'invention.

L'élément ou composé additionnel peut être très varié, particulièrement un métal, un oxyde, un nitrure ou un carbure. Nous entendons par métal, un métal pur ou un alliage. Il peut donc être avantageusement un composé à base métallique. A des fins de simplification, nous utiliserons dans la suite du document les termes d'élément additionnel ou de composé additionnel sans distinction, tant pour un élément seul que pour un composé ou un alliage.

De manière nouvelle, l'invention permet l'utilisation de métaux qui ne pouvaient pas être utilisés avec les solutions existantes, comme les métaux nobles à haut point de fusion, supérieur ou égal à 1200° C, voire supérieur ou égal à 1500° C. Ainsi, l'invention permet d'utiliser comme élément additionnel le platine, le rhodium, l'osmium, le palladium, le ruthénium, ou l'iridium.

Ainsi, un composé additionnel peut être un alliage métallique, obtenu par le dépôt direct de l'alliage métallique sur la poudre céramique liantée ou non ou par la combinaison de dépôts successifs ou simultanés de plusieurs des éléments de l'alliage métallique sur la poudre céramique, liantée ou non.

Naturellement, plusieurs éléments ou composés additionnels différents peuvent être utilisés et déposés sur la même poudre céramique, simultanément ou successivement, par une ou plusieurs étapes de dépôt E3 telles que décrites ci-dessus. Cette augmentation des composés additionnels disponibles permet naturellement d'augmenter les couleurs possibles pour une céramique, ainsi que les autres propriétés possibles, notamment mécaniques ou tribologiques.

En remarque, l'homme du métier a l'habitude d'ajouter des pigments de couleur par voie liquide dans une céramique. Il n'est pas habitué à agir par voie sèche, ni à faire un dépôt directement sur une poudre céramique, liantée ou non. Lors d'un tel dépôt par voie sèche, les paramètres suivants sont à considérer :
- L'homogénéité du dépôt sur les poudres,
- L'homogénéité de forme et de taille des grains,
- Les températures du procédé,
- Le risque de dégazage,
- Le caractère électrostatique des solides divisés en mouvement (isolants),
- L'état de finition et la nature des matériaux de l'équipement ; il faut notamment bien choisir le couple entre la nature du dépôt et la nature des liants des granules pour éviter le collage de la poudre sur l'équipement.

Par exemple, lors d'un dépôt PVD, afin de réduire les risques d'agglomération de la poudre au sein d'une enceinte PVD dus aux faibles tailles de particules mais également à leur caractère électrostatique, la déposition est avantageusement effectuée sur la poudre céramique liantée, par exemple sur des granules de pressage (taille moyenne de l'ordre de quelques dizaines de microns) ou sur des poudres céramiques injectables sous forme de pellets (taille moyenne de l'ordre de quelques millimètres) qui sont de plus grandes dimensions. Cette approche met ainsi en présence un substrat mixte comprenant une poudre céramique et des composés organiques dont la tenue en température est faible, une température maximale étant de 45 °C.

On s'aperçoit de plus que le procédé de l'invention permet d'atteindre des résultats très satisfaisants, au niveau des propriétés nouvelles ou améliorées des composants en céramique, même avec des quantités très faibles de composé additionnel ajouté à la céramique. Ainsi, la couleur d'un composant en céramique est non seulement améliorée par rapport aux solutions existantes en ce qu'elle est homogène et/ou peut permettre des teintes nouvelles, mais en plus, ce résultat amélioré est obtenu par l'ajout d'un élément ou composé additionnel de coloration en très faible quantité, notamment en quantité nettement inférieure à la quantité de pigments de coloration utilisée avec la méthode traditionnelle.

Par exemple, le procédé de dépôt PVD est utilisé avec une teneur en poids d'élément ou de composé additionnel inférieure ou égale à 5%, voire inférieure ou égale à 3%, voire 2%. Avantageusement, cette teneur est supérieure ou égale à 0,01%. Avantageusement, cette teneur est comprise entre 0.01 % et 5 % inclus, voire entre 0.01 % et 3 % inclus. En remarque, toutes les teneurs en poids sont mesurées sur le composant en céramique terminé (après réalisation de la quatrième phase du procédé de fabrication) ou sur la poudre céramique utilisée, déliantée. Le procédé de dépôt ALD est même utilisé pour obtenir des teneurs en poids encore inférieures, éventuellement inférieures ou égales à 5%, mais aussi notamment inférieures ou égales à 2%, voire 1%, voire inférieures ou égales à 0,05%, voire inférieures ou égales à 0,01%. Avantageusement, ces teneurs sont supérieures ou égales à 1 ppm. Avantageusement, ces teneurs sont comprises entre 1 ppm et 0,01 % inclus, voire entre 1 ppm et 0,05 % inclus, voire entre 1 ppm et 5% inclus. L'invention présente donc l'avantage d'obtenir des résultats très intéressants avec une faible quantité de matière, voire une très faible quantité de matière, sans recourir à l'élaboration d'un lot complet à chaque fois, et en permettant de surcroît de modifier un lot de base par itérations.

Il est de plus important de souligner que le procédé de l'invention permet d'obtenir une répartition homogène ou une bonne dispersion d'un composé additionnel, et donc finalement d'obtenir un composant en céramique de couleur homogène. Si le dépôt d'un élément additionnel est effectué sur une poudre céramique, donc avant la réalisation de la deuxième phase du procédé, la poudre céramique ainsi enrichie subit une succession d'étapes de dispersion/broyage en voie liquide lors de la deuxième phase P2, pour la lianter avec un composé organique, avant de l'atomiser pour en faire par exemple des granules en fin de deuxième phase P2 du procédé. Cette deuxième phase P2 permet ainsi de répartir de manière homogène le composé additionnel. En variante, si le composé additionnel est déposé après la deuxième phase P2 du procédé, donc par exemple directement sur des granules, le composé additionnel se trouve réparti en surface des granules du fait du procédé de dépôt utilisé, et est ainsi réparti de manière homogène sur la poudre céramique liantée. Le composé additionnel se retrouvera ainsi réparti de manière homogène dans le composant en céramique terminé.

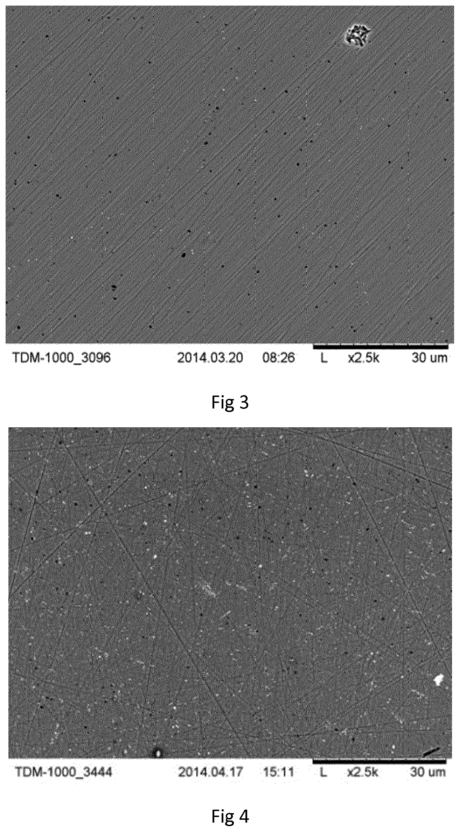

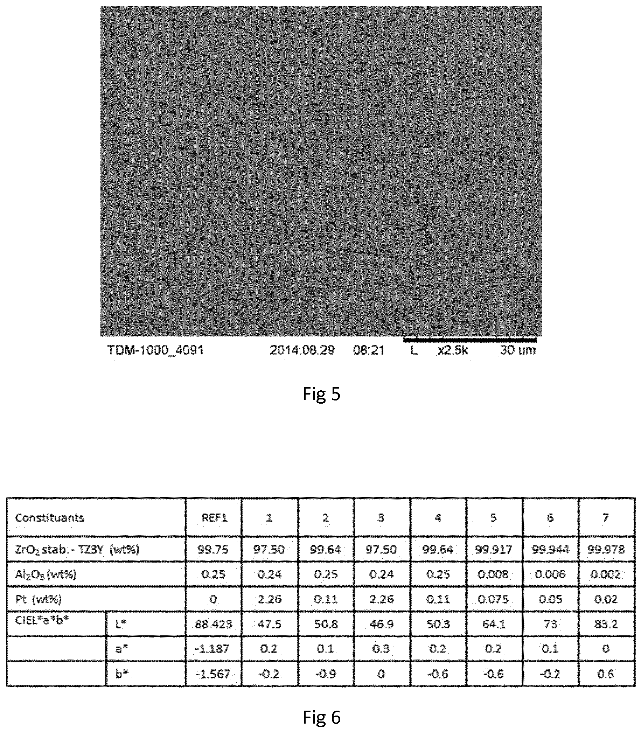

Dans les deux cas précédents, l'analyse du corps obtenu en fin de la quatrième phase montre que la répartition homogène du composé additionnel est conservée dans le composant en céramique finalisé. Si le dépôt PVD a été effectué sur la poudre céramique, il apparaît une répartition finale des particules de composé additionnel dans la microstructure céramique aléatoire et microscopiquement homogène. Si le dépôt PVD a été réalisé directement sur les granules de pressage, on retrouvera dans la microstructure du composant en céramique une répartition ordonnée des particules de composé additionnel suivant une superstructure rappelant la microstructure des granules pressés (voir figures 2 et 3 commentées plus loin). En variante, cette répartition de petites particules de composé additionnel peut être parfaitement homogène en ajoutant après le dépôt une étape d'attrition (voir les figures 4 et 5). Dans le cas de dépôts sur le feedstock d'injection, l'homogénéisation de la répartition des particules du composé additionnel dans le matériau a notamment lieu lors de l'étape de plastification du mélange fondu par la vis d'injection. Ainsi, dans tous les cas, le composant en céramique comprend un élément additionnel réparti de manière homogène dans son volume, ce qui lui permet de présenter la propriété induite par cet élément additionnel réparti de manière homogène dans le composant en céramique.

Finalement, l'étape de dépôt E3 du mode de réalisation de l'invention apporte les avantages principaux suivants :
- Elle permet d'obtenir un ajout d'un élément ou composé additionnel parfaitement maîtrisé et en très faible quantité, et permet donc de mettre en oeuvre un microdosage du composé additionnel ;
- Elle permet d'obtenir une répartition homogène du composé additionnel à la surface de la poudre céramique ou de la poudre céramique liantée, qui apporte in fine des propriétés homogènes au composant céramique ;
- Elle permet l'ajout d'une multitude de composés additionnels, augmentant le nombre de composés additionnels possibles, par rapport aux solutions existantes, augmentant les possibilités pour doter un composant en céramique de certaines propriétés ;
- Elle permet un dépôt fiable, répétable et propre d'un composé additionnel.

L'invention est illustrée ci-dessous par sept exemples qui permettent de fabriquer un composant en céramique grise, selon des teintes impossibles à fabriquer avec les techniques traditionnelles. Dans tous ces sept exemples, le composé additionnel est le platine, qui est déposé par dépôt PVD sur une poudre de pressage. Tous les résultats obtenus, notamment en termes de couleur, sont résumés dans le tableau de la figure 6.

Le premier exemple repose sur l'utilisation d'une poudre céramique liantée sous forme de granules, contenant de la zircone yttriée à 3 %molaire (TZ3Y) et comprenant 0.25 % en poids d'alumine et 3 % en poids de liants organiques (REF1). 50 grammes de ces granules sont placés dans le bol vibrant d'une enceinte PVD contenant une cathode en platine. L'enceinte PVD est mise sous vide puis le platine est pulvérisé avec un plasma d'argon. Une analyse par ICP (Inducted Coupled Plasma) a permis de doser la teneur en platine de ces granules, préalablement déliantés. Les échantillons issus de cet exemple contiennent globalement une teneur en platine de 2.26 % en poids. Les granules revêtus obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. A l'issue du frittage, les faces de la pastille en céramique sont rectifiées puis polies. Le composant en céramique obtenu est de couleur grise. La figure 2 est une image obtenue par microscope électronique à balayage de la pastille en céramique obtenue, qui montre la répartition des particules de platine (points clairs). Cette figure permet de mettre en évidence la répartition ordonnée des particules de platine, en une superstructure microscopique, autour des anciens granules de pressage. A l'échelle du composant, la répartition des particules est homogène.

Le deuxième exemple est réalisé à partir d'une poudre de pressage liantée contenant de la zircone yttriée à 3 %molaire (TZ3Y) et comprenant 0.25 % en poids d'alumine et 3 % en poids de liants organiques, sous forme de granules (REF1). 50 grammes de ces granules sont placés dans le bol vibrant d'une enceinte PVD contenant une cathode en platine. L'enceinte PVD est mise sous vide puis le platine est pulvérisé avec un plasma d'argon. Une analyse par ICP (Inducted Coupled Plasma) a permis de doser la teneur en platine de ces granules préalablement déliantés. Les échantillons de cet exemple contiennent globalement une teneur en platine de 0.11 % en poids. Les granules revêtus obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. A l'issue du frittage, les faces de la pastille sont rectifiées puis polies. Le composant en céramique obtenu est de couleur grise. La figure 3 est une image obtenue par microscope électronique à balayage de la pastille en céramique obtenue, qui montre la répartition de particules de platine (points clairs) au niveau des joints de grains. A l'échelle du composant, cette répartition est homogène. Du fait de la teneur très faible du platine, ces particules de platine sont peu visibles.

Dans le troisième exemple, une partie de la poudre obtenue lors de la réalisation de l'exemple 1 est prélevée. On ajoute alors une étape de déliantage puis un traitement d'attrition (mélange, broyage en voie liquide) et de liantage. Dans ce traitement, 0.47 g de PVA, 0.71 g de PEG 20 000, et 170 ml d'eau DI (déionisée) sont ajoutés à 39.4 g de poudre de l'exemple 1 déliantée. La suspension ainsi obtenue est placée dans le bol en zircone d'un attriteur avec 1 kg de billes de zircone pour être attritée durant 1 heure à 400 tour/minute. La suspension est ensuite recueillie pour être séchée et granulée par atomisation à l'aide d'un « Spray Dryer ». Les granules ainsi obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. Les échantillons de cet exemple contiennent toujours globalement la même teneur de 2.26 % en poids de platine que dans l'exemple 1. A l'issue du frittage, les faces de la pastille sont rectifiées puis polies. Le composant en céramique obtenu est de couleur grise. La figure 4 est une image obtenue par microscope électronique à balayage de la pastille en céramique obtenue, qui montre la répartition microscopiquement homogène de particules de platine (points clairs) au sein des grains de zircone. Les différences de couleur des céramiques polies issues des exemples 1 et 3 sont imperceptibles à l'oeil (Δ E<1) et dans l'erreur de mesure donnée par l'appareil ; nous estimerons donc que pour l'oeil humain la répartition des particules de platine dans ces deux échantillons est identique.

Dans le quatrième exemple, une partie de la poudre obtenue lors de la réalisation du deuxième exemple est prélevée. On ajoute alors une étape de déliantage puis un traitement d'attrition et de liantage. Dans ce traitement, 0.46 g de PVA, 0.69 g de PEG 20 000, et 166 ml d'eau DI (déionisée) sont ajoutés à 38.5 g de poudre de l'exemple 2 déliantée. La suspension ainsi obtenue est placée dans le bol en zircone d'un attriteur avec 1 kg de billes de zircone pour être attritée durant 1 heure à 400 tour/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. Les échantillons de cet exemple contiennent toujours globalement la même teneur de 0.11 % en poids de platine que dans l'exemple 2. A l'issue du frittage, les faces de la pastille sont rectifiées puis polies. Le composant en céramique obtenu est de couleur grise. La figure 5 est une image obtenue par microscope électronique à balayage de la pastille en céramique obtenue, qui montre la répartition microscopiquement homogène de particules de platine (points clairs) au sein des grains de zircone. Du fait de la teneur très faible du platine, ces particules de platine 2 sont peu visibles. Les différences de couleur des céramiques polies issues des exemples 2 et 4 sont imperceptibles à l'oeil (Δ E<1) et dans l'erreur de mesure donnée par l'appareil ; nous estimerons donc que pour l'oeil humain la répartition des particules de platine dans ces deux échantillons est identique.

Dans le cinquième exemple, 3.32 g de la poudre obtenue lors de la réalisation du troisième exemple est prélevée et déliantée afin d'être mélangée avec 96.68 g de poudre commerciale (zircone yttriée 3 % molaire, non liantée) avant de subir un traitement d'attrition. Puis 1.2 g de PVA, 1.8 g de PEG 20 000, et 200 ml d'eau DI (déionisée) sont ajoutés à 100 g de poudre obtenue. La suspension ainsi obtenue est placée dans le bol en zircone d'un attriteur avec 1 kg de billes de zircone pour être attritée durant 70 minutes à 400 tours/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. Les échantillons de cet exemple contiennent une teneur de 0.075 % en poids de platine. A l'issue du frittage, les faces de la pastille sont rectifiées puis polies. Le composant en céramique obtenu est de couleur grise.

Dans le sixième exemple, 2.21 g de la poudre obtenue lors de la réalisation du troisième exemple est prélevée et déliantée afin d'être mélangée avec 97.79 g de poudre commerciale (zircone yttriée 3 % molaire, non liantée) avant de subir un traitement d'attrition. Puis 1.2 g de PVA, 1.8 g de PEG 20 000, et 200 ml d'eau DI (déionisée) sont ajoutés à 100 g de poudre obtenue. La suspension ainsi obtenue est placée dans le bol en zircone d'un attriteur avec 1 kg de billes de zircone pour être attritée durant 70 minutes à 400 tours/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. Les échantillons de cet exemple contiennent une teneur de 0.05 % en poids de platine. A l'issue du frittage, les faces de la pastille sont rectifiées puis polies. Le composant en céramique obtenu est de couleur grise.

Dans le septième exemple, 0.77 g de la poudre obtenue lors de la réalisation du troisième exemple est prélevée et déliantée afin d'être mélangée avec 99.23 g de poudre commerciale (zircone yttriée 3 % molaire, non liantée) avant de subir un traitement d'attrition. Puis 1.2 g de PVA, 1.8 g de PEG 20 000, et 200 ml d'eau DI (déionisée) sont ajoutés à 100 g de poudre obtenue. La suspension ainsi obtenue est placée dans le bol en zircone d'un attriteur avec 1 kg de billes de zircone pour être attritée durant 70 minutes à 400 tours/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. Les échantillons de cet exemple contiennent une teneur de 0.02 % en poids de platine A l'issue du frittage, les faces de la pastille sont rectifiées puis polies. Le composant en céramique obtenu est de couleur grise.

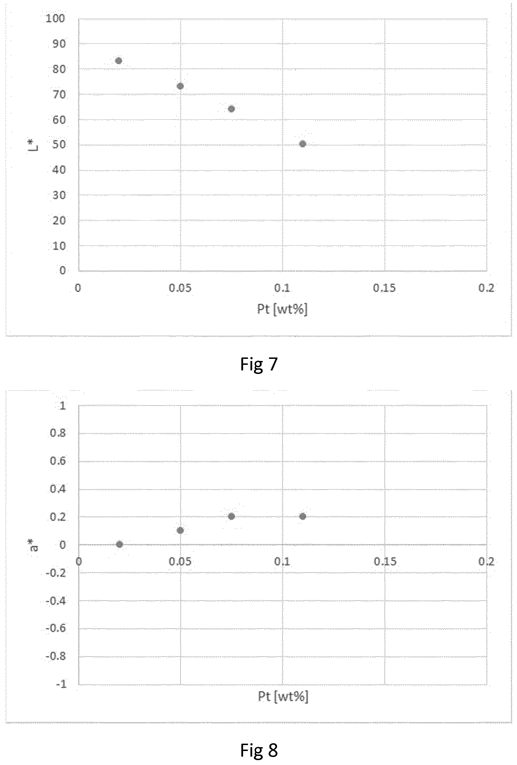

Le tableau de la figure 6 représente les résultats des sept exemples précédents. Il est intéressant de constater que tous ces exemples permettent d'obtenir une céramique grise. Ainsi, de manière générale, un mode de réalisation de l'invention permet avantageusement de fabriquer une céramique grise, caractérisée par les deux paramètres a* et b* compris entre -1 et 1 inclus. D'autre part, il est intéressant de noter que la teinte varie en fonction de la teneur en platine, comme cela est résumé par les figures 7 à 9.

De manière similaire, l'ajout de tout métal noble, de couleur grise à l'état métallique tels que le rhodium, l'osmium, le palladium, le ruthénium, ou l'iridium, viendra foncer une céramique initialement blanche sans que des interactions entre ces métaux additionnels et les constituants de la céramique ne viennent générer de pigments chromatiques qui nous écarteraient de l'axe L* de l'espace CIELab.

En remarque, l'attrition après l'ajout du platine permet de mieux répartir le platine dans la matière (voir figures 2 à 5) et ne modifie pas significativement la couleur de la céramique obtenue dans ces exemples. On constate également une très légère augmentation de la densité des échantillons liée à l'attrition. Cette attrition reste toutefois optionnelle.

Naturellement, l'invention ne se limite pas à la fabrication d'un composant en céramique contenant du platine comme composé additionnel. Il est possible d'obtenir une couleur grise avec un autre composé additionnel que le platine par exemple avec du rhodium, du palladium ou tout autre métal noble gris ne réagissant pas avec les autres composants de la céramique ou l'atmosphère de frittage.

En variante donc, d'autres modes de réalisation de l'invention peuvent permettre de fabriquer un composant en céramique grise, caractérisée par une composante L* inférieure à 96 et les deux paramètres a* et b* compris entre -3 et 3 inclus, voire entre -2 et 2 inclus, voire entre -0,5 et 0,5.

De manière optionnelle, le procédé de fabrication peut comprendre une étape préalable E1 d'ajout d'un autre composé à la poudre de céramique, par exemple l'ajout de pigments de coloration ou tout autre composé selon l'approche traditionnelle rappelée précédemment ou selon d'autres techniques connues de l'homme du métier, par exemple par imprégnation. En effet, l'invention reste compatible avec tous les autres procédés existants, et peut venir en complément, par exemple pour l'enrichir. Cette étape E1 peut être réalisée à tout moment opportun du procédé de fabrication. Elle peut être réalisée avant ou après l'étape E3.

Comme cela a été mentionné précédemment, la solution de l'état de la technique pour colorer un composant en céramique est complexe et non satisfaisante. D'autre part, lorsqu'on souhaite modifier une teinte, même légèrement, d'un composant en céramique préalablement coloré à l'aide de pigments selon l'état de la technique, il apparaît très difficile de le faire avec la technique traditionnelle, notamment parce que les pigments ont tendance à réagir entre eux lors du frittage. Ainsi, selon l'état de la technique, il est long et fastidieux de modifier l'intensité (clarté) et/ou la teinte de la coloration d'une céramique colorée : en effet, chaque tentative nécessite la réalisation d'un nouveau lot de poudre céramique, puis la fabrication d'un feedstock d'injection, et jusqu'à la réalisation des composants céramiques terminés (frittés et polis).

Avec le procédé de l'invention, il devient beaucoup plus facile de réaliser une telle modification de couleur ou d'intensité. Plus généralement, toute autre modification de propriété du composant en céramique devient facilement réalisable.

Ainsi, un mode de réalisation de l'invention repose sur un procédé de fabrication d'une poudre céramique ou d'un composant en céramique, notamment à base de zircone et/ou d'alumine et/ou d'aluminate de strontium, qui comprend les étapes suivantes :
- Se munir d'une poudre céramique liantée contenant des pigments de coloration ou plus généralement d'au moins un composé ajouté ou additionnel qui permettraient d'obtenir un composant en céramique d'une première couleur ou plus généralement doté d'une première propriété par fabrication d'un composant en céramique à partir de cette poudre céramique liantée ;
- Déposer E3 au moins un élément ou composé additionnel, de coloration ou autre, sur ladite poudre céramique liantée par un dépôt physique en phase vapeur PVD ou par un dépôt chimique en phase vapeur CVD ou par un dépôt par couche atomique ALD ;
- Finaliser la fabrication du composant en céramique à partir de la poudre céramique liantée incluant le composé additionnel déposé afin d'obtenir un composant en céramique dont la couleur est une deuxième couleur, différente de la première couleur, ou plus généralement doté d'une deuxième propriété, différente de la première propriété.

Par un tel procédé, une première propriété obtenue à partir d'une poudre céramique liantée du commerce peut être facilement modifiée en une deuxième propriété par l'ajout d'un composé additionnel selon un mode de réalisation de l'invention. Comme ce mode de réalisation de l'invention met en oeuvre une étape E3 facile à implémenter, à maîtriser et à reproduire, il devient aisé de procéder à plusieurs essais pour obtenir par tâtonnement la propriété finale souhaitée pour le composant en céramique, sans exiger une intervention fastidieuse au niveau de l'élaboration d'une poudre céramique non liantée.

Ainsi, le procédé de fabrication d'un composant en céramique peut répéter des étapes de dépôt d'au moins un composé additionnel sur ladite poudre céramique liantée, en modifiant la teneur dudit composé additionnel, voire le composé additionnel lui-même, et de finalisation de la fabrication du composant en céramique, jusqu'à s'approcher suffisamment du résultat souhaité.

En pratique, il est donc possible de mettre en oeuvre une étape de sélection d'une poudre céramique liantée contenant des pigments de coloration permettant d'obtenir une première couleur s'approchant d'une deuxième couleur souhaitée, puis de modifier la couleur par l'ajout d'un composé additionnel de coloration, jusqu'à s'approcher suffisamment de la couleur souhaitée. La même approche peut être mise en oeuvre pour modifier toute autre propriété que la couleur, comme mentionné précédemment.

Avantageusement, le au moins un composé additionnel est choisi non réactif avec les composés ajoutés déjà présents dans la poudre céramique liantée, par exemple des pigments de coloration.

Les pigments présents dans la poudre céramique liantée peuvent comprendre un ou plusieurs éléments parmi un oxyde métallique, un oxyde de terre rare, un aluminate de cobalt, et/ou des pigments phosphorescents.

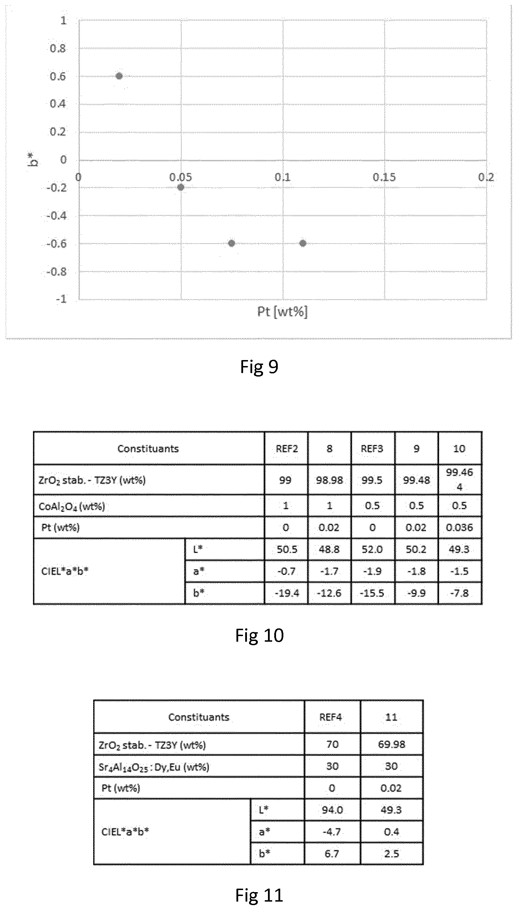

Les trois exemples suivants, numérotés exemples huit à dix, illustrent ce principe, dans le cas d'un composant en céramique contenant un aluminate de cobalt (pigment bleu). Les résultats sont présentés dans le tableau de la figure 10.

Dans le huitième exemple, un composant en céramique est initialement coloré à partir d'une poudre céramique commerciale de zircone yttriée à 3 % molaire (TZ3Y) contenant 0.25 % en poids d'alumine, et à laquelle a été ajoutée une quantité de 3 % en poids de liants organiques ainsi que 1 % en poids de pigment CoAl₂O₄ par la voie humide conventionnelle (REF2). La suspension obtenue est séchée et granulée par atomisation. Les granules sont ensuite pressés pour obtenir un échantillon. Cet échantillon est délianté et fritté, pour obtenir un composant en céramique, de couleur bleue caractérisée par les paramètres suivants CIE L*a*b* (50.5 ; -0.7 ; -19.4).

Selon le mode de réalisation de l'invention, la poudre céramique liantée décrite ci-dessus est d'abord déliantée. Ensuite, 1 g de la poudre déliantée du premier exemple décrit précédemment est ajouté à 99 g de cette poudre céramique déliantée. Puis, 1.2 g de PVA, 1.8 g de PEG 20 000, et 200 ml d'eau DI sont ajoutés à 100 g de cette poudre céramique modifiée. La suspension ainsi obtenue est placée dans le bol en zircone d'un attriteur avec 1 kg de billes de zircone, pour être attritée durant 70 minutes à 400 tours/minute. La suspension est ensuite recueillie pour être séchée et granulée par atomisation à l'aide d'un « Spray Dryer ».. Les granules obtenus sont ensuite pressés dans un moule cylindrique sur une presse uniaxiale. La pastille ainsi obtenue est déliantée sous air à 600°C durant 18 heures. Elle est finalement frittée sous air à 1450°C avec un palier de 2 heures, selon un cycle connu de l'homme du métier. Les échantillons de ce huitième exemple contiennent 0.02 % en poids de platine. A l'issue du frittage, les faces de la pastille sont rectifiées puis polies. La couleur modifiée est ensuite constatée (voir figure 10).

Le neuvième exemple considère d'abord la fabrication d'une poudre de zircone yttriée 3% molaire (TZ3Y) contenant 3 % en poids de liants organiques, ainsi que 0.5 % en poids de pigments CoAl₂O₄ intégrés par la voie humide conventionnelle (REF3). La suspension obtenue est séchée et granulée par atomisation. Les granules sont ensuite pressés pour obtenir un échantillon. Cet échantillon est délianté et fritté. La céramique obtenue est de couleur bleue, de paramètres CIEL*a*b* (52.0 ; -1.9 ; -15.5).

Ensuite, les granules utilisés pour fabriquer ce composant en céramique à base de zircone sont déliantés. 1 g de la poudre déliantée du premier exemple est ajouté à 99 g de cette poudre céramique déliantée. Dès lors, on ajoute à ces 100 g de poudre mélangée 1.2 g de PVA, 1.8 g de PEG 20 000, et 200 ml d'eau DI. La suspension obtenue est placée dans le bol en zircone d'un attriteur avec 1 kg de billes de zircone pour être attritée durant 70 minutes à 400 tours/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de 2 heures. Les échantillons de ce neuvième exemple contiennent 0.02 % en poids de platine. A l'issue du frittage, les faces de la pastille sont rectifiées puis polies. Le composant en céramique présente ainsi une couleur modifiée (voir paramètres présentés en figure 10).

Dans le dixième exemple, un composant en céramique est formé à partir d'une poudre commerciale de zircone yttriée à 3% molaire (TZ3Y) contenant 0.25 % en poids d'alumine, contenant 3 % en poids de liants organiques et 0.5 % en poids de pigment CoAl₂O₄, ajoutés par la voie humide conventionnelle (REF3). La suspension obtenue est séchée et granulée par atomisation. Les granules sont ensuite pressés pour obtenir un échantillon. Cet échantillon est délianté et fritté. La céramique obtenue est de couleur bleue, de paramètres CIE L*a*b* (52.0 ; -1.9 ; -15.5).

Selon le mode de réalisation, les granules utilisés pour fabriquer le composant en céramique précédent sont d'abord déliantés. Ensuite, 1.8 g de la poudre céramique déliantée de l'exemple 1 est ajouté à 98.2 g de cette poudre céramique déliantée. Puis, 1.2 g de PVA, 1.8 g de PEG 20 000, et 200 ml d'eau DI sont ajoutés à 100 g de la poudre céramique modifiée. La suspension ainsi obtenue est placée dans le bol en zircone d'un attriteur avec 1 kg de billes de zircone pour être attritée durant 70 minutes à 400 tour/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée sous air à 1450°C avec un palier de 2 heures. Les échantillons de ce dixième exemple contiennent donc 0.036 % en poids de platine. A l'issue du frittage, les faces de la pastille sont rectifiées puis polies. Le composant en céramique présente ainsi une couleur modifiée (voir paramètres présentés en figure 10).

Les trois exemples précédents sont basés sur l'utilisation du mode de réalisation de l'invention pour atteindre facilement une couleur souhaitée, à partir d'une poudre céramique pigmentée dont la couleur est finalement modifiée.

De manière plus générale, le mode de réalisation de l'invention est simplement compatible avec toutes les autres techniques d'ajout d'au moins un composé à une poudre céramique. Ainsi, l'invention peut être combinée à toute autre technique, notamment à une approche traditionnelle, pour obtenir toute sorte de céramique aux propriétés nouvelles.

A titre d'exemple, un onzième exemple considère une poudre céramique de zircone yttriée à 3 % molaire, à laquelle a été ajoutée une quantité de 30 % en poids de pigment luminescent Sr₄Al₁₄O₂₅:Dy,Eu ainsi que 3 % en poids de liants organiques par la voie humide conventionnelle (REF4). La suspension obtenue est séchée et granulée par atomisation. Les granules sont pressés, déliantés sous air et frittés à 1450 °C durant 2 heures sous une atmosphère particulière. Ce procédé traditionnel permet d'obtenir une céramique de couleur définie par de paramètres CIE L*a*b* (94.0 ; -4.7 ; 6.7).

En variante combinant un mode de réalisation de l'invention, les granules de la poudre céramique composite utilisée ci-dessus sont déliantés. Puis 1 g de la poudre déliantée du premier exemple sont ajoutés à 99 g de cette poudre. Dès lors, 1.2 g de PVA, 1.8 g de PEG 20 000, et 200 ml d'eau DI sont ajoutés à 100 g de la poudre obtenue. La suspension ainsi résultante est placée dans le bol en zircone d'un attriteur avec 1 kg de billes de zircone pour être attritée durant 70 minutes à 400 tour/minute. La suspension est ensuite recueillie pour être séchée et granulée par atomisation à l'aide d'un « Spray Dryer ». Les granules obtenus sont ensuite pressés dans un moule cylindrique sur une presse uniaxiale. La pastille ainsi obtenue est déliantée sous air à 600 °C durant 18 heures. Elle est finalement frittée à 1450 °C avec un palier de 2 heures sous une atmosphère particulière. Les échantillons de ce onzième exemple contiennent 0.02 % en poids de platine. A l'issue du frittage, les faces de la pastille sont rectifiées puis polies. Il en résulte ainsi un composant en céramique coloré et luminescent, par une combinaison de l'invention avec un procédé traditionnel, dont les caractéristiques précises sont résumées dans le tableau de la figure 11. En variante, d'autres couleurs pourraient être conférées à un tel composant en céramique phosphorescent par l'ajout d'autres éléments ou composés additionnels.

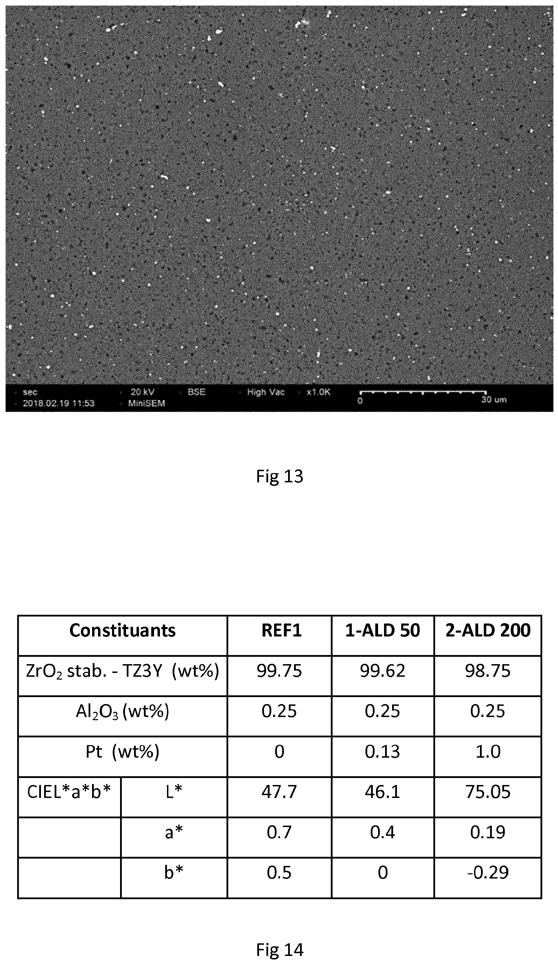

Des exemples complémentaires ci-dessous permettent de fabriquer un composant en céramique grise, selon des teintes impossibles à fabriquer avec les techniques traditionnelles, à partir de l'utilisation spécifique du procédé ALD, sur une poudre non liantée. Tous les résultats obtenus, notamment en termes de couleur, sont résumés dans le tableau de la figure 14.

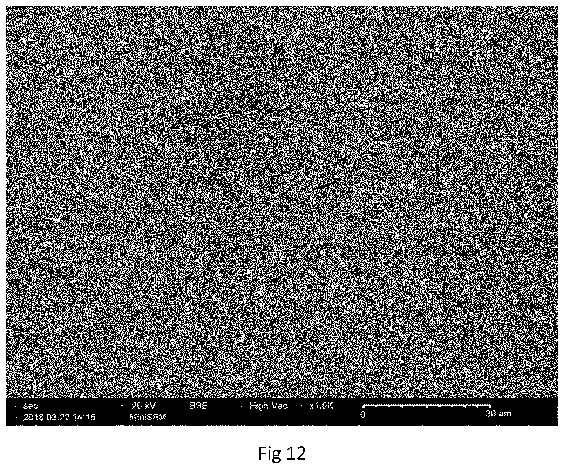

Le premier exemple repose sur l'utilisation d'une poudre céramique, non liantée, composée de zircone yttriée à 3 %molaire (TZ3YS). 10 grammes de cette poudre sont placés dans le bol vibrant d'une enceinte ALD, qui est mise sous vide, afin d'engager le dépôt de platine par le procédé ALD. 50 cycles de dépôt sont réalisés.
La poudre céramique ainsi revêtue subit ensuite un traitement d'attrition (mélange, broyage en voie liquide) et de liantage. Dans ce traitement, 0.6 g de PVA, 0.9 g de PEG 20 000, et 116 ml d'eau déionisée sont ajoutés à 50.4 g de ladite poudre céramique, recouverte de platine. La suspension ainsi obtenue est placée dans le bol en zircone d'un attriteur avec 1 kg de billes de zircone, pour être attritée/broyée durant 2 heures à 400 tour/minute. La suspension est ensuite recueillie pour être séchée et granulée par atomisation à l'aide d'un « Spray Dryer ». Les granules ainsi obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. A l'issue du frittage, les faces de la pastille en céramique sont rectifiées puis polies. Le composant en céramique obtenu est de couleur grise. La figure 12 est une image obtenue au microscope électronique à balayage (MEB) de la pastille en céramique frittée, qui montre la répartition des particules de platine (points clairs). Cette figure permet de mettre en évidence la répartition homogène des particules de platine. En effet, à l'échelle du composant, nous considérons la répartition de ces particules comme homogène. La couleur résultante apparaît homogène à l'oeil nu. La couleur et la composition sont données dans le tableau de la figure 15 sous la référence 1 ALD 50.

Le deuxième exemple repose sur l'utilisation d'une poudre céramique, non liantée, composée de zircone yttriée à 3 % molaire (TZ3YS). 10 grammes de cette poudre sont placés dans le bol vibrant d'une enceinte ALD, qui est mise sous vide, afin d'engager le dépôt de platine par le procédé ALD. 200 cycles de dépôt sont réalisés. La poudre céramique ainsi revêtue subit ensuite un traitement d'attrition (mélange, broyage en voie liquide) et de liantage. Dans ce traitement, 0.6 g de PVA, 0.9 g de PEG 20 000, et 120 ml d'eau déionisée sont ajoutés à 50.4 g de ladite poudre céramique, recouverte de platine. La suspension ainsi obtenue est placée dans le bol en zircone d'un attriteur avec 1 kg de billes de zircone, pour être attritée/broyée durant 2 heures à 400 tour/minute.
La suspension est ensuite recueillie pour être séchée et granulée par atomisation à l'aide d'un « Spray Dryer ». Les granules ainsi obtenus sont ensuite pressés dans un moule cylindrique sur une presse uniaxiale. La pastille ainsi obtenue est déliantée sous air à 600 °C durant 18 heures. Elle est finalement frittée sous air à 1450 °C avec un palier de deux heures. A l'issue du frittage, les faces de la pastille en céramique sont rectifiées puis polies. Le composant en céramique obtenu est de couleur grise. La figure 13 est une image obtenue au microscope électronique à balayage (MEB) de la pastille en céramique frittée, qui montre la répartition des particules de platine (points clairs). Cette figure permet de mettre en évidence la répartition homogène des particules de platine. En effet, à l'échelle du composant, nous considérons la répartition de ces particules comme homogène. La couleur résultante apparaît homogène à l'oeil nu. La couleur et la composition sont données dans le tableau de la figure 15 sous la référence 2 ALD 200.

Le tableau de la figure 14 représente les résultats des deux exemples précédents. Il est intéressant de constater que ces exemples permettent d'obtenir une céramique grise. Ainsi, de manière générale, un mode de réalisation de l'invention permet avantageusement de fabriquer une céramique grise, caractérisée par les deux paramètres a* et b* compris entre -1 et 1 inclus.

La coloration d'un composant en céramique est particulièrement importante pour une pièce d'horlogerie ou de joaillerie, parce qu'elle permet d'obtenir une esthétique souhaitée. Ainsi, l'invention est particulièrement intéressante pour fabriquer un composant horloger ou de joaillerie. Ce composant horloger peut notamment être une lunette de montre, un cadran, un index, une couronne de remontoir, un poussoir ou tout autre élément d'habillage horloger ou d'un mouvement horloger. L'invention porte aussi sur une pièce d'horlogerie, notamment une montre, comprenant un tel composant horloger.

## Revendications

1. Composant en céramique, notamment à base de zircone et/ou d'alumine et/ou d'aluminate de strontium, pour pièce d'horlogerie ou de joaillerie, **caractérisé en ce qu'**il comprend au moins un métal noble parmi le platine, le rhodium, l'osmium, le palladium, le ruthénium, ou l'iridium, en quantité inférieure ou égale à 5% en poids.

2. Composant en céramique selon la revendication précédente, **caractérisé en ce que** ledit au moins un métal noble est réparti dans tout le volume du composant en céramique.

3. Composant en céramique selon l'une des revendications précédentes, **caractérisé en ce que** ledit au moins un métal noble est réparti de manière homogène dans le composant en céramique.

4. Composant en céramique selon l'une des revendications précédentes, **caractérisé en ce que** ledit au moins un métal noble est en quantité inférieure ou égale à 3% en poids, voire à 2% en poids, voire à 1% en poids.

5. Composant en céramique selon l'une des revendications précédentes, **caractérisé en ce que** ledit au moins un métal noble est en quantité supérieure ou égale à 1ppm, ou à 10 ppm, ou à 0,01% en poids.

6. Composant en céramique selon l'une des revendications précédentes, **caractérisé en ce que** ledit au moins un métal noble donne au composant en céramique une couleur grise définie par les coordonnées colorimétriques a* et b* de valeurs comprises dans la plage [-3 ; 3] ou dans la plage [-2 ; 2] ou dans la plage [-1 ; 1] ou dans la plage [-0.5 ; 0.5].

7. Composant en céramique selon l'une des revendications 1 à 5, **caractérisé en ce qu'**il comprend des pigments de coloration distincts et en complément dudit au moins un métal noble.

8. Composant en céramique selon l'une des revendications précédentes, **caractérisé en ce qu'**il comprend plusieurs métaux nobles et/ou un alliage métallique comprenant au moins un métal noble.

9. Composant en céramique selon l'une des revendications précédentes, **caractérisé en ce qu'**il est une lunette de montre, un cadran, un index, une couronne de remontoir, un poussoir ou tout autre élément d'habillage horloger ou tout élément d'un mouvement horloger.

10. Pièce d'horlogerie ou de joaillerie comprenant un composant en céramique selon l'une des revendications précédentes.

11. Poudre céramique, liantée ou non, notamment à base d'alumine ou de zircone, **caractérisée en ce qu'**elle comprend au moins un métal noble parmi le platine, le rhodium, l'osmium, le palladium, le ruthénium, ou l'iridium, en quantité inférieure ou égale à 5% en poids, en dehors d'éventuels composés organiques.

12. Poudre céramique, liantée ou non, selon la revendication précédente, **caractérisée en ce que** ledit au moins un métal noble est déposé au moins partiellement en surface des particules de la poudre céramique liantée ou non.

13. Poudre céramique selon la revendication 11 ou 12, liantée ou non, **caractérisée en ce que** ledit au moins un métal noble est déposé par un dépôt physique en phase vapeur (PVD) et/ou par un dépôt chimique en phase vapeur (CVD) et/ou par un dépôt par couche atomique (ALD).

14. Poudre céramique selon l'une des revendications 11 à 13, liantée ou non, **caractérisée en ce qu'**elle comprend outre le au moins un métal noble, un ou plusieurs éléments ajoutés, notamment des pigments de coloration, notamment un élément ajouté distinct dudit au moins un métal noble.
